# EUROPEAN PATENT APPLICATION

(11) **EP 2 017 487 A2**
(43) Date of publication of application: **21.01.2009**
(21) Application number: 08013026.3
(22) Date of filing: 18.07.2008
(51) Int. Cl.: F16C 33/54, F16C 33/66, F16H 57/02

(54) **Tapered roller bearing with lubricant grooves on the cage**

(30) Priority: 20.07.2007 JP 2007188933; 20.07.2007 JP 2007188934
(71) Applicant: JTEKT Corporation, Osaka-shi Osaka 542-8502 (JP)
(72) Inventor: Sada, Takashi, Osaka-shi Osaka 542-8502 (JP); Matsuyama, Hiroki, Osaka-shi Osaka 542-8502 (JP)
(74) Representative: Hager, Thomas Johannes

(57) **Abstract**

Guide grooves (6) for guiding lubricating oil (L) from a small rib-side end portion (3b) of an inner ring (3) to a large rib-side end portion (3c) thereof are formed at an inner periphery of a cage (5).

## Description

### BACKGROUND OF THE INVENTION

This invention relates to a tapered roller bearing, and more particularly to a tapered roller bearing which supports a pinion shaft, for example, of a final reduction gear of an automobile, and is lubricated by lubricating oil received within this final reduction gear.

A tapered roller bearing (see JP-A-2005-69421) which includes a plurality of tapered rollers disposed between an outer ring and an inner ring, and a cage holding these tapered rollers is compact, and can support large radial and axial loads, and besides can be used at a high rotational speed. Therefore, such tapered roller bearings have been extensively used in a pinion shaft support apparatus for a vehicle, etc., as shown in JP-A-200-0-170775.

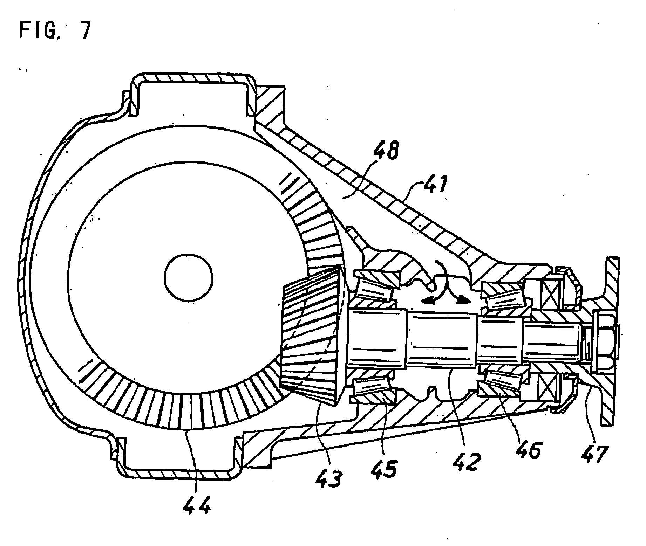

Fig. 7 shows a differential gear apparatus of the type in which a tapered roller bearing of the present invention can be used. The differential gear apparatus includes a pinion shaft 42 rotatably supported on a housing 41 and having a pinion gear 43 provided at a rear end thereof, a ring gear 44 meshing with the pinion gear 43, a pair of inner and outer tapered roller bearings 45 and 46 rotatably supporting the pinion shaft 42 on the housing 41, and a drive shaft-connecting flange coupling 47 formed at an outer end of the pinion shaft 42.

In this differential gear apparatus, lubricating oil splashed up in accordance with the rotation of the ring gear 44 flows through a lubricating oil passageway 48 within the housing 41, and is introduced into a region between the pair of tapered roller bearings 45 and 46. When the tapered roller bearings 45 and 46 rotate, a flow of the fluid (a pumping action) from a small rib side of an inner ring of each bearing toward a large rib side thereof occurs. Therefore, in the tapered roller bearings 45 and 46 used in the differential gear apparatus, the lubricating oil is supplied thereto from the small rib side of the inner ring, and is discharged from the large rib side of the inner ring, utilizing this pumping action. This lubricating method is commonly used.

In JP-A-2005-69421, it is proposed to achieve a low-torque design of the tapered roller bearing by reducing the amount of flow of lubricating oil from the small rib side-end of the inner ring into the bearing.

In the lubricating method disclosed in the JP-A-2000-170775, the lubricating oil can be easily introduced into each tapered roller bearing. However, during the high-speed operation, most of the lubricating oil flows toward an outer ring under the influence of a centrifugal force, and therefore the lubricating oil is not sufficiently distributed to the vicinity of the large rib of the inner ring, and much heat is generated at an area of contact between the large rib of the inner ring and large end faces of the tapered rollers, so that seizure is liable to develop.

On the other hand, in a pinion shaft support apparatus of a vehicle, etc., to reduce a running torque of a tapered roller bearing in order to achieve a low-loss design has been a global problem. For reducing the running torque, it is effective to reduce the amount of lubricating oil passing through the bearing to thereby suppress an oil agitation loss caused by the lubricating oil, and with the construction disclosed in JP-A-2005-69421, the low-torque design can be achieved. Here, when the amount of the lubricating oil is reduced, the risk of seizure of the large rib increases, and therefore it is necessary to secure the lubrication of the large rib of the inner ring when the amount of the lubricating oil is reduced.

### SUMMARY OF THE INVENTION

It is an object of this invention to provide a tapered roller bearing in which even when the amount of lubricating oil within the tapered roller bearing is much reduced, a large rib of an inner ring is less liable to undergo seizure, thereby achieving both of a low-torque design and a seizure resistance.

According to the present invention, there is provided a tapered roller bearing comprising an outer ring, an inner ring, a plurality of tapered rollers disposed between the outer and inner rings, and a cage holding the tapered rollers, wherein the inner ring is mounted on a rotation shaft; characterized in that guide grooves for guiding lubricating oil from a small rib-side end portion of the inner ring to a large rib-side end portion thereof are formed at an inner periphery of the cage.

For forming the guide grooves, there may be used a method in which pillar portions of the cage are made thicker as compared with a conventional cage, and recesses extending from a smaller-diameter end face to a larger-diameter end face are formed respectively in these pillar portions, and theses recesses are used as guide grooves, respectively. There may be used another method in which at the time of forming pockets by stamping, part of stamped-out portions are bent generally at right angels relative to pillar portions, thereby forming the guide grooves. In the latter method, the stamped-out portions are the portions to be discarded, and the groove portions are formed using these portions to be discarded, and by doing so, the cage provided with the guide grooves can be produced without increasing the cost.

Lubricating oil is supplied to the tapered roller bearing from the small rib side thereof, and is fed to the large rib side thereof by a. pumping action of the tapered roller bearing. At this time, the lubricating oil tends to shift or move toward the outer ring under the influence of a centrifugal force. However, each guide groove receives the lubricating oil by its bottom surface and opposed side surfaces, and reduces the amount of the lubricating oil shifting toward the outer ring.. As a result, the lubricating oil undergoing the centrifugal force is guided along the guide grooves toward the cone back face-side end face of the inner ring. Thus, a proper amount of lubricating oil is supplied to the large rib of the inner ring of the tapered roller bearing, so that seizure is suppressed.

Preferably, a lubricating oil-leading portion is formed on and projects radially inwardly from a larger-diameter end of the cage. With this construction, the lubricating oil guided to the large rib by the guide grooves is positively led or guided to the large rib by the lubricating oil-leading portion, and a lubricating ability of this portion is further enhanced, so that a seizure resistance can be further enhanced.

In the tapered roller bearing of the present invention, the amount of shifting of lubricating oil toward the outer ring is reduced, so that the lubricating oil is easily supplied to the large rib of the inner ring. As a result, seizure of the large rib which is most liable to undergo seizure can be suppressed, and therefore the amount of lubricating oil to be supplied to the tapered roller bearing can be reduced, and a friction loss of the bearing can be reduced. Therefore, the low-torque design and the seizure resistance can both be achieved.

According to the present invention, there is provided a tapered roller bearing comprising an outer ring, an inner ring, a plurality of tapered rollers disposed between the outer and inner rings, and a cage holding the tapered rollers, wherein the inner ring is mounted on a rotation shaft; characterized in that a guide member is disposed between the cage and the inner ring so as to reduce the amount of shifting of lubricating oil toward the outer ring and also to guide the lubricating oil to a cone back face rib of the inner ring, the guide member having pockets which receive the tapered rollers, respectively.

The guide member having the pockets is analogous in shape to the cage, and the cage is fitted to the tapered rollers from that side where the outer ring is disposed, whereas the guide member is fitted to the tapered rollers from that side where the inner ring is disposed.

Lubricating oil is supplied to the tapered roller bearing from a retaining rib side thereof, and is fed to a cone back face rib side thereof by a pumping action of the tapered roller bearding. At this time, the lubricating oil tends to shift or move toward the outer ring under the influence of a centrifugal force. However, the guide member reduces the amount of shifting of the lubricating oil toward the outer ring, and guides the lubricating oil such that the lubricating oil can be supplied to the cone back face rib of the inner ring. Thus, a proper amount of lubricating oil is supplied-to the cone back face rib of the inner ring of the tapered roller bearing, so that seizure is suppressed.

In the tapered roller bearing of the present invention, the amount of shifting of lubricating oil toward the outer ring is reduced, so that the lubricating oil is easily supplied to the cone back face rib of the inner ring. As a result, seizure of the cone back face rib which is most liable to undergo seizure can be suppressed, and therefore the amount of lubricating oil to be supplied to the tapered roller bearing can be reduced, and a friction loss of the bearing can be reduced. Therefore, the low-torque design and the seizure resistance can both be achieved.

### BRIEF DESCRIPTION OF THE DRAWINGS

Fig.. 1 is a longitudinal cross-sectional view showing an upper half of a tapered roller bearing according to a first embodiment of the present invention.
Fig. 2 is a transverse cross-sectional view showing a portion of the tapered roller bearing according to the first embodiment.
Fig. 3 is a longitudinal cross-sectional view showing an upper half of a tapered roller bearing according to a second embodiment of the invention.
Fig. 4 is a view similar to Fig. 2, but showing a conventional tapered roller bearing.
Fig. 5 is a longitudinal cross-sectional view showing an upper half of a tapered roller bearing according to a third embodiment of the present invention.
Fig. 6 is a view of an important portion of the tapered roller bearing as seen from a radially-outward side.
Fig. 7 is a longitudinal cross-sectional view of a differential gear apparatus in which the tapered roller bearing of the invention can be used.

### DETAILED DESCRIPTION OF PREFERRED EMBODIMENTS

Preferred embodiments of the present invention will now be described with reference to the drawings. In the following description, "a right-left direction" means a right-left direction in the drawings.

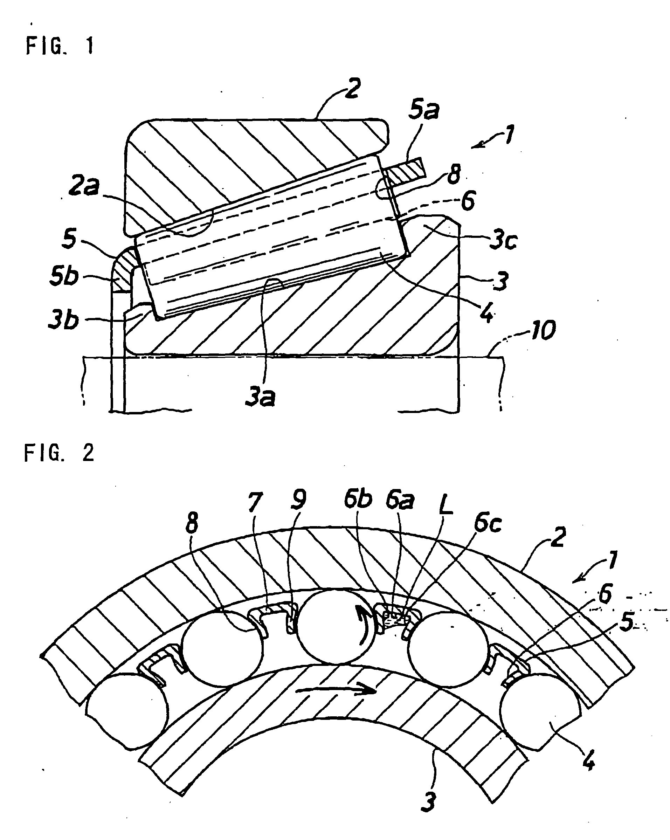

Figs. 1 and 2 show a first embodiment of a tapered roller bearing of the invention. This tapered roller bearing .1 comprises an outer ring 2 to be mounted on a housing (not shown), an inner ring 3 to be mounted on a rotation shaft 10, a plurality of tapered rollers 4 disposed between the outer and inner rings 2 and 3, and a cage 5 holding the tapered rollers 4.

The inner ring 3 has a tapered raceway surface 3a, and a small rib 3b for limiting an axial movement of the tapered rollers 4 is formed at a left end portion of the raceway surface -3a, while a large rib 3c for limiting the axial movement of the tapered rollers 4 is formed at a right end portion of the raceway surface 3a.

The outer ring 2 has a tapered raceway surface 2a, and a right end face of the outer ring 2 is disposed inwardly of a right end face of the inner ring 3.

The cage 5 includes a larger-diameter end portion 5a projecting right beyond the tapered rollers 4, and a smaller-diameter end portion 5b projecting left beyond the tapered rollers 4. The smaller-diameter end portion 5b is bent radially inwardly such that its inner peripheral edge is generally opposed to the small rib 3b of the inner ring 3 in slightly spaced relation thereto.

The outer ring 2, the inner ring 3 and the tapered rollers 4 are made, for example, of bearing steel, and the cage 5 is made of metal or a resin.

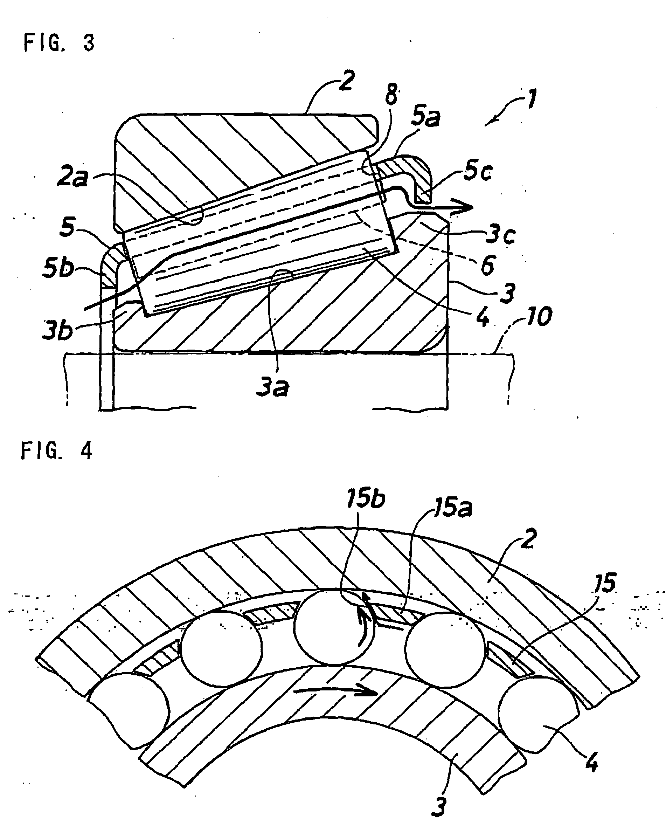

As shown in Fig. 4, a conventional cage 15 has plate-like pillar portions 15a, and when an inner ring 3 rotates, lubricating oil is moved or shifted through an inner peripheral surface of each pillar portions 15a to an adjoining pocket 15b under the influence of a centrifugal force as indicated by an arrow, and can easily escape rapidly toward an outer ring 2.

On the other hand, in the tapered roller bearing 1 of the invention, guide grooves 6 for guiding lubricating oil from the small rib-side end portion of the inner ring 2 to the large rib-side end portion thereof are formed at the inner periphery of the cage 5.

The cage 5 is made of metal, and at the time of forming the pockets 8 by stamping, part of stamped-out portions are bent generally at right angels relative to the pillar portions 7, thereby forming the guide grooves 6. The cage 5 may be made of a resin, and in this case pillar portions 7 of this cage 5 are made thicker as compared with a conventional cage, and recesses extending from the smaller-diameter end face to the larger-diameter end face are formed respectively in these pillar portions 7, and theses recesses are used as guide grooves 6, respectively.

In the tapered roller bearing 1 of this embodiment, the cage 5 has the guide grooves 6 each defined by a bottom surface 6a and a pair of opposed side surfaces 6b and 6c. Lubricating oil tending to shift toward the outer ring 2 under the influence of the centrifugal force is less liable to be introduced into the pockets 8 because of the provision of the side surfaces 6b and 6c of the guide grooves 6, so that the amount of shifting of the lubricating oil toward the outer ring 2 is reduced, and besides the lubricating oil is guided along the guide grooves 6 toward the large rib-side end face of the inner ring 3. The large rib 3c of the inner ring 3 is the portion where seizure is most liable to occur because of frictional heat developing between a roller guide face of the large rib 3c of the inner ring 3 and the end faces of the rollers 4. However, lubricating oil is guided to this portion by the guide grooves 6, and it is suitably lubricated, so that seizure can be suppressed.

The tapered roller bearing 1 of the invention can be suitably used as the bearing device of the automotive differential gear apparatus (shown in Fig. 7) which rotatably supports the pinion shaft 42 on the housing 41. The tapered roller bearing 1 is lubricated, using lubricating oil received within the housing 41, and at this time, in order to reduce the running torque, the amount of lubricating oil passing through the tapered roller bearing 1 is reduced, thereby suppressing an oil agitation loss caused by the lubricating oil. When the amount of the lubricating oil is reduced, the risk of seizure of the large rib 3c of the inner ring 3 increases. However, lubrication of the large rib 3c is secured by the guide grooves 6, and therefore even when the amount of lubricating oil within the tapered roller bearing 1 is much reduced, seizure is less liable to develop at the large rib 3c, and the low-torque design and the seizure resistance are both achieved.

Fig. 3 shows a second embodiment of a tapered roller bearing of the invention. This second embodiment differs from the first embodiment only in that a cage 5 of a different shape is used, and in the following description, those portions identical in construction to those of the first embodiment will be designated by identical reference numerals, respectively, and description thereof will be omitted.

The cage 5 of this embodiment has guide grooves 6 as described above for the first embodiment, and a larger-diameter end portion of the cage 5 is bent radially inwardly to form a lubricating oil-leading portion 5c. A peripheral edge of the lubricating oil-leading portion 5c is opposed to an outer peripheral surface of a large rib 3c of an inner ring 3, with a small clearance formed therebetween.

In the tapered roller bearing 1 of this embodiment, lubricating oil tending to shift toward an outer ring 2 under the influence of the centrifugal force is less liable to be introduced into pockets 8 because of the provision of side surfaces 6b and 6c of the guide grooves 6, so that the amount of shifting of the lubricating oil toward the outer ring 2 is reduced, and besides the lubricating oil is guided along the guide grooves 6 toward a large rib-side end face of the inner ring 3. Then, the lubricating oil is led or guided to the large rib 3c of the inner ring 3 by the lubricating oil-leading portion 5c formed at the larger-diameter end portion 5a of the cage 5. The large rib 3c of the inner ring 3 is the portion where seizure is most liable to occur because of frictional heat developing between a roller guide face of the large rib 3c of the inner ring 3 and end faces of rollers 4. However, lubricating oil is guided to this portion by the guide grooves 6 and the lubricating oil-leading portion 5c, and it is suitably lubricated, so that seizure can be suppressed.

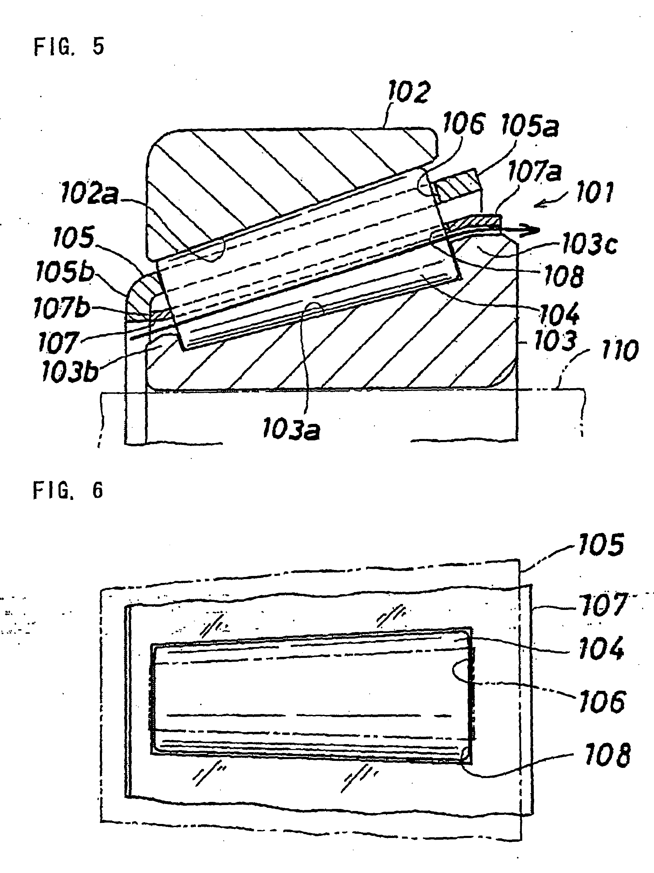

[0014-2] Figs. 5 and 6 show a tapered roller bearing according to a third embodiment of the invention. This tapered roller bearing 101 comprises an outer ring 102 to be mounted on a housing (not shown), an inner ring 103 to be mounted on a rotation shaft 110, a plurality of tapered rollers 104 disposed between the outer and inner rings 102 and 103, a cage 105 holding the tapered rollers 104, and a guide member 107 disposed between the cage 105 and the inner ring 103 so as to reduce the amount of shifting of lubricating oil toward the outer ring 102.

[0015-2] The inner ring 103 has a tapered raceway surface 103a, and a small rib 103b for limiting an axial movement of the tapered rollers 104 is formed at a left end portion of the raceway surface 103a, while a large rib 103c for limiting the axial movement of the tapered rollers 104 is formed at a right end portion of the raceway surface 103a.

[0016-2] The outer ring 102 has a tapered raceway surface 102a, and a right end face of the outer ring 102 is disposed inwardly of a right end face of the inner ring 103.

[0017-2] The cage 105 includes a larger-diameter end portion 105a projecting right beyond the tapered rollers 104, and a smaller-diameter end portion 105b projecting left beyond the tapered rollers 104. The smaller-diameter end portion 105b is bent radially inwardly such that its inner peripheral edge is generally opposed to the small rib 103b of the inner ring 103 in slightly spaced relation thereto.

[0018-2]. The construction of the tapered roller bearing 101 except the guide member 107 is already known, and the outer ring 102, the inner ring 103 and the tapered rollers 104 are made, for example, of bearing steel, and the cage 105 is made of metal or a resin.

[0019-2] The guide member 107 is made of the same material as that of the cage 105, and is made, for example, of metal. Like the cage 105, the guide member 107 has pockets 108 which receive the tapered rollers 104, respectively. The cage 105 is fitted to the tapered rollers 104 from that side where the outer ring 102 is disposed, whereas the guide member 107 is fitted to the tapered rollers 104 from that side where the inner ring 103 is disposed.

[0020-2] As shown in Fig. 5, a larger-diameter end portion 107a of the guide member 107 projects right beyond the larger-diameter end portion 105a of the cage 105, and is bent radially inwardly to extend along an outer peripheral surface of the large rib 103c of the inner ring 103. As shown in Fig. 5, a smaller-diameter end portion 107b of the guide member 107 is bent radially outwardly such that an edge of this end portion 107b abuts against the smaller-diameter end portion 105b of the cage 105.

[0021-2] The pockets 108 of the guide member 107 are formed such that each pocket 108 receives (or fits on) that portion of the tapered roller 104 disposed near to an axis thereof. Pockets 106 of the cage 105 are formed such that each pocket 106 receives (or fits on) that portion of the tapered roller 104 disposed generally midway between the axis of the tapered roller 104 and an outer peripheral surface thereof. A length of the pocket 108 in the circumferentical direction is slightly larger than that of the pocket 106 as shown in Fig. 6.

[0022-2] In the tapered roller bearing 101 of this embodiment, the large rib 103c of the inner ring 103 is the portion where seizure is most liable to occur because of frictional heat developing between a roller guide face of the large rib 103c of the inner ring 103 and the end faces of the rollers 104. However, lubricating oil is guided to this portion by the guide member 107, and it is suitably lubricated, so that seizure can be suppressed.

[0023-2] The tapered roller bearing 101 of the invention can be suitably used as the bearing device of the automotive differential gear (shown in Fig. 7) which rotatably supports the pinion shaft 142 on the housing 141. The tapered roller bearing 101 is lubricated, using lubricating oil received within the housing 141, and at this time, in order to reduce the running torque, the amount of lubricating oil passing through the tapered roller bearing 101 is reduced, thereby suppressing an oil agitation loss caused by the lubricating oil. When the amount of the lubricating oil is reduced, the risk of seizure of the large rib 103c of the inner ring 1'03 increases. However, lubrication of the large rib 103c is secured by the guide member 107, and therefore even when the amount of lubricating oil within the tapered roller bearing 101 is much reduced, seizure is less liable to develop at the large rib 103c, and the low-torque design and the seizure resistance are both achieved.

## Claims

1. A tapered roller bearing comprising:
an outer ring;
an inner ring that includes a small rib-side end portion and a large rib-side end portion and is to be mounted on a rotation shaft;
a plurality of tapered rollers disposed between the outer and inner rings; and
a cage that holds the tapered rollers and is formed at an inner periphery thereof with a guide groove for guiding lubricating oil from the small rib-side end portion to the large rib-side end portion.

2. The tapered roller bearing according to claim 1, wherein a lubricating oil-leading portion is formed on and projects radially inwardly from a larger-diameter end of the cage.

3. A differential gear apparatus comprising:
a housing;
a pinion shaft rotatably supported on the housing and including a pinion gear meshing with a ring gear; and
the tapered roller bearing according to claim 1 that rotatably supports the pinion shaft on the housing.

4. A tapered roller bearing comprising:
an outer ring;
an inner ring that includes a large rib and is to be mounted on a rotation shaft;
a plurality of tapered rollers disposed between the outer and inner rings;
a cage holding said tapered rollers; and
a guide member disposed between the cage and the inner ring so as to reduce the amount of shifting of lubricating oil toward the outer ring and to guide the lubricating oil to the large rib of the inner ring, the guide member having pockets which receive the tapered rollers, respectively.

5. A differential gear apparatus comprising:
a housing;
a pinion shaft rotatably supported on the housing and including a pinion gear meshing with a ring gear; and
the tapered roller bearing according to claim 4 that rotatably supports the pinion shaft on the housing.
